# EUROPEAN PATENT SPECIFICATION

(11) **EP 3 960 385 B1**
(45) Date of publication and mention of the grant of the patent: **21.10.2026**
(21) Application number: 21193316.3
(22) Date of filing: 26.08.2021
(51) Int. Cl.: B25F 5/00, B24B 23/02

(54) **RETENTION FLANGE FOR POWER TOOL**
HALTEFLANSCH FÜR ELEKTROWERKZEUG
BRIDE DE RÉTENTION POUR OUTIL ÉLECTRIQUE

(30) Priority: 28.08.2020 US 202063071416 P
(43) Date of publication of application: 02.03.2022
(60) Divisional application: 26205017.2
(73) Proprietor: Black & Decker Inc., New Britain, CT 06053 (US)
(72) Inventor: NACE, Daniel F., Towson, 21286 (US); STILES, James H., III, Baltimore, 21224 (US); HITTIE, Benjamin R., Baltimore, 21212 (US); KING, Christopher T., Catonsville, 21228 (US); BOWERS, Levi G., Manchester, 21102 (US)
(74) Representative: SBD IPAdmin

(56) References cited:
- EP-A2- 1 728 592
- US-B2- 9 399 278

## Description

This disclosure relates to power tools and in particular to grinding power tools.

In recent years, braking mechanisms have been introduced to brake and stop the motor in the event of various fault conditions (e.g., detection of a pinch), or, in some power tools, upon the user releasing the tool trigger switch. The problem with many braking mechanisms in power tool applications such as grinders is that high inertia of the accessory wheel my cause it to loosen and come off the output spindle upon rapid deceleration caused by application of strong and abrupt braking of the motor. This is particularly frequent where a hubbed grinding wheel is used without an outer tightening nut, where the high inertia of the wheel upon rapid deceleration may be greater than the tightening friction between the wheel and the output spindle. What is needed is a mechanism that increases the friction between the wheel and the output spindle to prevent it from coming off when brake is applied.

US9399278 discloses a power tool which forms the closest piece of prior art and which discloses all of the features of the pre-characterising portion of claim 1.

EP1728592 discloses an angle grinder.

The present invention provides a power tool as defined in claim 1. The power tool includes a housing, an electric motor housed within the housing, and an output spindle rotatably driven by the electric motor. The output spindle defines a longitudinal axis and includes a threaded portion near a distal end thereof and an annular rim integrally extending radially therefrom at a distance from the threaded portion. In an embodiment, the power tool further includes a retention flange with a radially-oriented disc-shaped portion having a center through-hole through which the output spindle extends and a cylindrical wall peripherally extending from the disc-shaped portion around the output spindle. The disc-shaped portion is located between the distal end and the annular rim, and the cylindrical wall extends around the annular rim. At least one spring member is provided engaging a first surface of the annular rim on one end and the disc-shaped portion on another end to bias the retention flange in a direction away from the annular rim. A retention member is provided to engage the retention flange and the annular rim and is configured to restrain an axial displacement of the retention flange away from the annular rim due to the biasing force of the spring member.

In an embodiment, as a tool accessory is tightened on the threaded portion of the output spindle, the tool accessory forces the retention member to move in the direction of the annular rim.

In an embodiment, the retention member engages a second surface of the annular rim facing away from the spring member.

In an embodiment, an inner surface of the cylindrical wall of the retention flange includes an annular recess. In an embodiment, the retention member includes a retaining ring received within the annular recess of the retention flange. The retaining ring comes into selective contact with the second surface of the annular rim of the output spindle to limit the displacement of the retention flange away from the annular rim.

In an embodiment, the retention flange further includes an annular shoulder formed by a radial projection on the inner surface of the cylindrical wall radially in line with the spring member. The annular shoulder comes into selective contact with the first surface of the annular rim of the output spindle to limit the displacement of the retention flange towards from the annular rim.

In an embodiment, the power tool further includes a motor spindle rotatably driven directly by the motor, a gear case mounted on the housing that receives an end of the motor spindle, and a bearing supported by the gear case. The output spindle is received from a lower end of the gear case into the bearing into engagement with the motor spindle.

In an embodiment, the motor spindle is at a 90 degree angle relative to the output spindle.

In an embodiment, the spring member includes one or more Belleville discs.

In an embodiment, a diameter of the annular rim of the output spindle is greater than a diameter of the spring member, but smaller than a diameter of the cylindrical wall of the retention flange.

In an embodiment, the retention flange includes a flat wall protruding inwardly from the cylindrical wall that engages a corresponding flat wall of the annular rim of the output spindle to rotationally fix the retention flange to the output spindle.

In an embodiment, the cylindrical wall of the retention flange includes openings and the annular rim of the output spindle includes radial projections configured to be fittingly received into the openings to rotationally fix the retention flange to the output spindle.

In an embodiment, a power tool is provided including a housing, an electric motor housed within the housing and rotatably driving a motor spindle, a gear case mounted on the housing, and an output spindle received at least partially within the gear case. The output spindle defines a longitudinal axis and includes a first distal end to which a tool accessory is secured, a second distal configured to engage the motor spindle, and an annular rim integrally extending radially from the output spindle between the first distal end and the second distal end. A bearing is provided including an inner race secured to the output spindle above the annular rim and an outer race secured to the gear case. The power tool includes a retention flange with a radially-oriented disc-shaped portion having a center through-hole through which the output spindle extends and a cylindrical wall peripherally extending from the disc-shaped portion around the output spindle. The disc-shaped portion is located between the first distal end and the annular rim, and the cylindrical wall extends around the annular rim. At least one spring member is disposed between the annular rim and the retention flange to apply a downward biasing force the retention flange away from the annular rim. A retention member is provided engaging the retention flange and the annular rim and is configured to restrain a downward movement of the retention flange away relative to the annular rim along the longitudinal axis due to the biasing force of the spring member.

In an embodiment, the output spindle includes a threaded portion at the first distal end, and as the tool accessory is tightened on the threaded portion, the tool accessory applies an upward force to the retention member in the direction of the annular rim.

In an embodiment, an inner surface of the cylindrical wall of the retention flange includes an annular recess, and the retention member includes a retaining ring received within the annular recess of the retention flange. The retaining ring comes into selective contact with an upper surface of the annular rim of the output spindle to limit the downward movement of the retention flange.

In an embodiment, the retention flange further includes an annular shoulder formed by a radial projection on the inner surface of the cylindrical wall radially in line with the spring member. The annular shoulder coming in selective contact with a lower surface of the annular rim of the output spindle to limit an upward movement of the retention flange.

In an embodiment, the motor spindle is at a 90 degree angle relative to the output spindle.

In an embodiment, the spring member comprises one or more Belleville discs.

In an embodiment, a diameter of the annular rim of the output spindle is greater than a diameter of the spring member, but smaller than a diameter of the cylindrical wall of the retention flange.

In an embodiment, the retention flange includes a flat wall protruding inwardly from the cylindrical wall that engages a corresponding flat wall of the annular rim of the output spindle to rotationally fix the retention flange to the output spindle.

In an embodiment, the cylindrical wall of the retention flange includes a series of openings and the annular rim of the output spindle includes a series of radial projections configured to be fittingly received into the openings to rotationally fix the retention flange to the output spindle.

### BRIEF DESCRIPTION OF THE DRAWINGS

The drawings described herein are for illustrative purposes only of selected embodiments and not all possible implementations, and they are not intended to limit the scope of the present disclosure.
Fig. 1 is a side cross-sectional view of a power tool, according to an embodiment;
Fig. 2 is a side cross-sectional view of a conventional wheel retention mechanism;
Fig. 3 depicts a perspective cross-sectional view of an improved wheel retention mechanism, according to an embodiment;
Fig. 4 depicts a partial side cross-sectional view of the wheel retention mechanism in an unmounted position, according to an embodiment;
Fig. 5 depicts a partial side cross-sectional view of the wheel retention mechanism in a mounted position, according to an embodiment;
Fig. 6 depicts a perspective view of a retention flange, according to an embodiment;
Fig. 7 depicts a perspective view of an output spindle, according to an embodiment;
Fig. 8 depicts a perspective exploded view of the wheel retention mechanism, according to an embodiment;
Fig. 9 depicts a perspective exploded view of an alternative embodiment of the wheel retention mechanism, according to an embodiment;
Fig. 10 depicts a side view of the power tool, according to an embodiment; and
Fig. 11 depicts a top cross-sectional view of the power tool showing the side air intakes and air inlets, according to an embodiment;

Corresponding reference numerals indicate corresponding parts throughout the several figures of the drawings.

### DETAILED DESCRIPTION

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

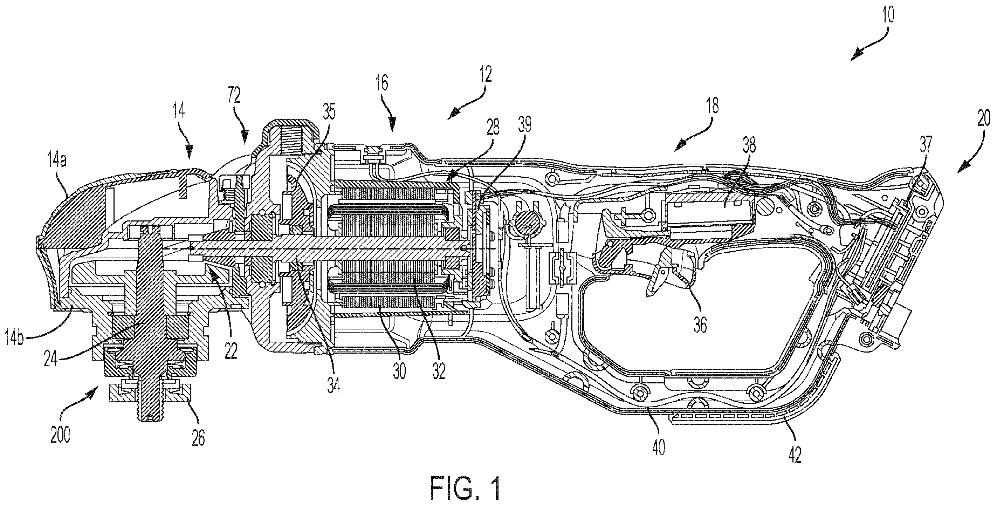

Fig. 1 is a side cross-sectional view of a power tool 10, according to an embodiment. In an embodiment, power tool 10 is provided including a housing 12 having a gear case 14, a motor case 16, a handle portion 18, and a battery receiver 20. Power tool 10 as shown herein is an angle grinder with the gear case 14 housing a gearset 22 that drives an output spindle 24 arranged to be coupled to a grinding or cutting disc (not shown, herein referred to as "accessory wheel"), either via threads on the disc, or via a flange (or threaded nut) 26 and guarded by a disc guard (not shown). It should be understood, however, that the teachings of this disclosure may apply to any other power tool including, but not limited to, a saw, drill, sander, and the like. Gearset 22 may include the output spindle 24 at a 90-degree angle orientation or in a linear orientation. In an embodiment, gear case 14 includes an upper gear case cover 14a and a lower gear case cover 14b that cooperatively house the gearset 22 components.

In an embodiment, the motor case 16 attaches to a rear end of the gear case 14 and houses a motor 28 operatively connected to the gear set 22. An intermediary plate or baffle may be disposed between the motor case 16 and the rear end of the gear case 14. In an embodiment, the motor 28 is a brushless direct-current (BLDC) motor having a stator 30 and a rotor 32 rotatable relative to the stator 30. The rotor 32 is mounted on a rotor shaft 34 that rotatably drives the output spindle 24 via the gearset 22. A fan 35 is mounted on the rotor shaft 34 between the motor 28 and the gear case 14, facing the intermediary plate or baffle, to generate an airflow for cooing the motor 28 and other components. The airflow generated by the fan 35 exits through an air exhaust vent 72 provided on the motor case 16 and/or the gear case 14.

In an embodiment, the handle portion 18 extends from a rear end of the motor case 16 and includes a trigger switch 36 operatively connected to a switch assembly 38. The switch assembly 38 is in turn coupled to a control module 37 that includes a programmable controller and controls a switching operation of a power module 39. In an embodiment, the control module 37 is disposed at a rear of the handle portion 18 adjacent the battery receiver 20. The battery receiver 20 is provided at the rear end of the handle portion 18 for detachable engagement with a battery pack (not shown) to provide power to the motor 28.

In an embodiment, a second handle 40 is provided that extends from the rear end of the motor case 16 to the battery receiver 20, at least partially in parallel to the handle portion 18. In an embodiment, second handle 40 is a D-handle designed to enhance structural support for the handle portion 18 and the battery pack and improve drop performance of the power tool 10. In an embodiment, second handle 40 is provided with a bumper 42 arranged to absorb shock during drop or impact. In an embodiment, bumper 42 is made of an overmold material.

In an exemplary embodiment, the battery pack may be a 60-volt max lithium-ion type battery pack, although battery packs with other battery chemistries, shapes, voltage levels, etc. may be used in other embodiments. In various embodiments, the battery receiver 20 and battery pack may be a sliding pack disclosed in U.S. Pat. No. 8,573,324, hereby incorporated by reference. However, any suitable battery receiver and battery back configuration, such as a tower pack or a convertible 20V/60V battery pack as disclosed in US Patent Application No. 14/715,258 filed May 18, 2015, also incorporated by reference, can be used. The present embodiment is disclosed as a cordless, battery-powered tool. However, in alternate embodiments power tool can be corded, AC-powered tools. For instance, in place of the battery receiver and battery pack, the power tool 10 include an AC power cord coupled to a transformer block to condition and transform the AC power for use by the components of the power tools. Power tool 10 may for example include a rectifier circuit adapted to generate a positive current waveform from the AC power line. An example of such a tool and circuit may be found in US Patent Publication No. 2015/0111480, filed October 18, 2013.

In an embodiment, the power module 39 is disposed at a rear of the motor 28, i.e. between the motor case 16 and the handle portion 18. In an embodiment, power module 39 is a circuit board oriented radially adjacent the end of the motor 28 including a series of Field-Effect Transistors (FETs) interconnected as a multi-phase inverter circuit for powering the phases of the motor 28. In an embodiment, control module 37, switch assembly 38, and power module 39 may be provided discretely or integrated into sub-assemblies.

In an embodiment, the control module 37 uses the input from the trigger assembly 38 to set a target speed for the motor 28. This is done by controlling a pulse-width modulation (PWM) of the power switches within the power module 39. When the trigger switch 36 is released, in an embodiment, the control module 37 activates the low-side switches or the high-side switches of the power module 39 simultaneously for regenerative electronic braking of the motor 28. A description of the power and control modules and electronic braking of the motor can be found in US Patent Publication No. 2017/0234484, filed February 10, 2017.

Braking of the motor at high speed, either electronically or via a mechanical brake, causes rapid deceleration of the output spindle 24. Absent a mechanism to retain and protect the accessory wheel, high inertia of the accessory wheel can cause it to detach from the output spindle 24 upon rapid deceleration. For this reason, in some configurations, the nut 26 may be provided with a spring mechanism to apply an upward force on the accessory wheel to increase friction between the accessory disc and an upper flange of the power tool 10. Additionally, and/or alternatively, in some configurations, the power tool 10 may be provided with a wheel retention mechanism configured to apply a downward force on the accessory wheel to similarly increase the friction between the accessory disc and the upper flange of the power tool 10 as well as the friction between the threads of the accessory wheel and the output spindle 24, resulting in an increased accessory unseating torque. This increased friction significantly reduces the likelihood of the accessory wheel coming off the output spindle 24.

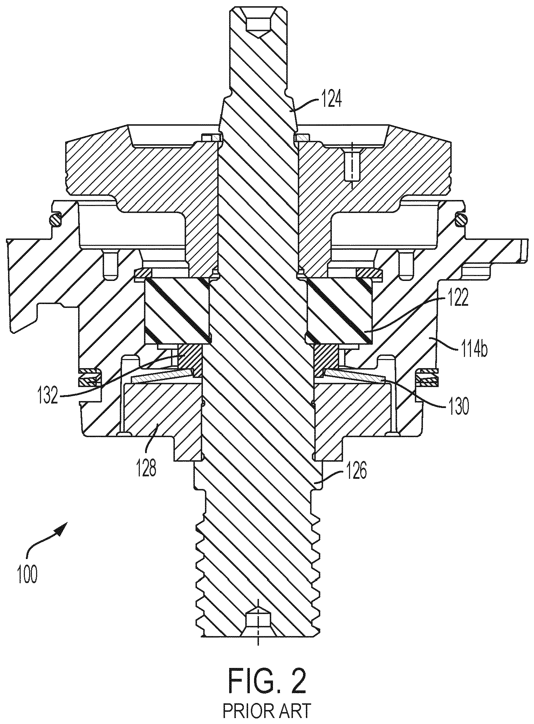

Referring to Fig. 2, a prior art wheel retention mechanism 100 is described. Only the lower gear case cover 114b, output spindle 124, and wheel retention mechanism 100 components are illustrated in this view. In this configuration, output spindle 124 is axially fixed to the lower gear case cover 114b via a bearing 122 and includes a rim 126 disposed at a location below the bearing 122 and below a plane of the lower gear case cover 114b. Wheel retention mechanism 100 includes a transfer member 128 disposed around the output spindle 124 above the rim 126. A spring member 130 (in this example a Belleville disc) is disposed between the transfer member 128 and the bearing 122 (via a spacer 132). A backing flange (not shown) is typically mounted on the lower end of the output spindle 124 in contact with the transfer member 128. When a wheel accessory is mounted on the output spindle 124, the rotational force of the accessory as it is being tightened imparts an upward force on the transfer member 128 through the backing flange, causing the transfer member 128 to move upward relative to the output spindle 124 against the force of the spring member 130. The spring member 130 applies a downward force on the transfer member 128, thus increasing friction between the transfer member 128, the backing flange, and the wheel accessory.

In this configuration, during manufacturing and assembly, the transfer member 128 and spring member 130 are mounted over the rim 126 before the output spindle 124 is received through the bottom surface of the lower gear case cover 114b. The bearing 122 is then mounted on the output spindle 124 (e.g., by press-fitting or slip-fitting) with the spring member 130 in a preload condition. This process has been found to be slow and burdensome. In addition, since the force of the spring 130 is transferred to the bearing 122 during use, it has been found to adversely affect the press between the bearing 122 and the output spindle 124 and at times even cause displacement of the bearing 122 over time.

US Patent No. 9,399,278 is another example of a prior art wheel retention mechanism. In this configuration, a flange is mounted on the output spindle (either via threads or press-fitting) to support one end of the spring element. Thus, the force of the spring element is not transferred to the bearing. However, the transfer element is not self-supported on the output spindle and can only be mounted via a supporting flange.

The embodiment of the invention described herein overcomes the problems associated with the prior art configuration of Fig. 2, but also provides a wheel retention mechanism that is self-supported on the output spindle.

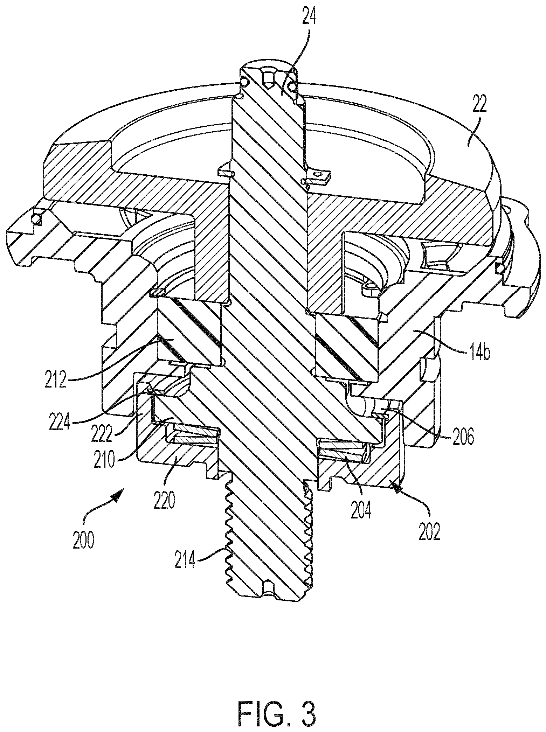

Referring to Fig. 3, wheel retention mechanism 200 includes a retention flange 202 and one or more spring elements 204. The retention flange 202 has a cup-shaped body that includes a main disc-shaped portion 220 having a center through-hole disposed around the output spindle 24 and a cylindrical wall 222 extending peripherally from the disc-shaped portion 220. Output spindle 24 includes an annular rim 210 below which the spring elements 204 and disc-shaped portion 220 of the retention flange 202 are disposed. Spring elements 204 are sandwiched between the annular rim 210 and the disc-shaped portion 220 of the retention flange 202. The spring members 204 are depicted in this example as a stack of Belleville discs, though it should be understood that a single Belleville disc, or an alternative form of spring such as a compression spring, may alternatively be utilized. A top portion of the cylindrical wall 222 of the retention flange 202 includes an annular recess 224 in its inner surface that receives a retaining ring 206. Retaining ring 206 sits above the annular rim 210 to axially limit the downward movement of the retention flange 202.

In an embodiment, annular rim 210 is provided at approximately the same plane as a bottom portion of the lower gear case cover 14b with a diameter that is greater than a diameter of the spring elements 204 and at least twice the diameter of the output spindle 24. A bearing 212 is provided above the annular rim 210 to axially secure the output spindle 24 to the lower gear case cover 14b. Gearset 22 is provided above the bearing 212 to rotationally drive the output spindle 24. A threaded portion 214 of the output spindle 24, to which a threaded wheel accessory or a threaded nut is fastened, is positioned below the lower surface of the retention flange 202.

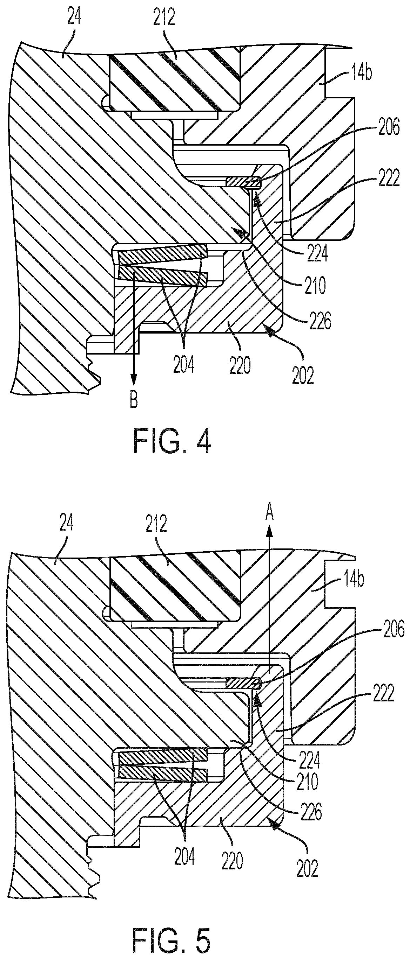

Fig. 4 depicts a partial side cross-sectional view of the wheel retention mechanism in an unmounted position of the wheel accessory (i.e., where no accessory wheel is tightened on the threated portion 214 of the output spindle 24), according to an embodiment. In an embodiment, in the unmounted position, the spring members 204 exert a force in the direction B to the retention flange 202. The force of the spring members 204 in the direction B causes the disc-shaped portion 220 of the retention flange 202 to move away from the annular rim 210 of the output spindle 24, creating a small separation between the annular rim 210 and an annular shoulder 226 of the retention flange 202. This movement is limited by the retaining ring 206 as it meets a top portion of the annular rim 210.

Fig. 5 depicts a partial side cross-sectional view of the wheel retention mechanism in a mounted position of the wheel accessory, according to an embodiment. In an embodiment, in the mounted position, after the accessory wheel (or an intermediary flange or spacer) comes into contact with the retention flange 202, the continued fastening of the accessory wheel or the nut on the threaded portion 214 of the output spindle 24 applies a force in the direction A to the retention flange 202. Once this force is greater than the force of the spring members 204 in direction B, the retention flange 202 is moved towards the annular rim 210 until the annular shoulder 226 of the retention flange 202 comes into contact with the annular rim 210. This causes a small separation between the upper portion of the annular rim 210 and the retaining ring 206. In this position, the spring members 204 continues to apply a downward force on the retention flange 202, which increases the traction between the accessory wheel and the retention flange 202 and improve the retention of the accessory wheel on the output spindle 24.

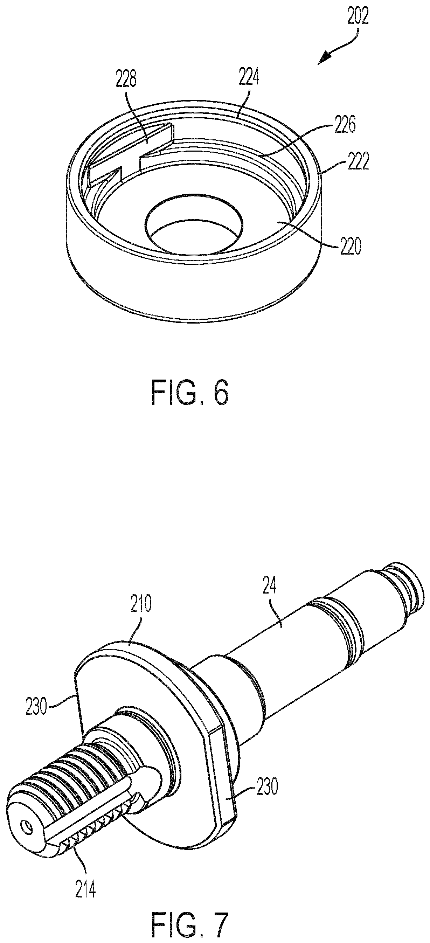

Fig. 6 depicts a perspective view of the retention flange 202, according to an embodiment. Fig. 7 depicts a perspective view of the output spindle 24, according to an embodiment. As shown in these figures, retention flange 202 includes one or more flat walls 228 (in this example, two flat walls 228) provided on the inner surface of the cylindrical wall 222. The annular rim 210 of the output spindle 24 similarly includes one or more flat side portions 230 (in this example, two flat walls 228) arranged to engage the flat walls 228 of the retention flange 202. This ensures that the retention flange 202 is rotationally coupled to the output spindle 24.

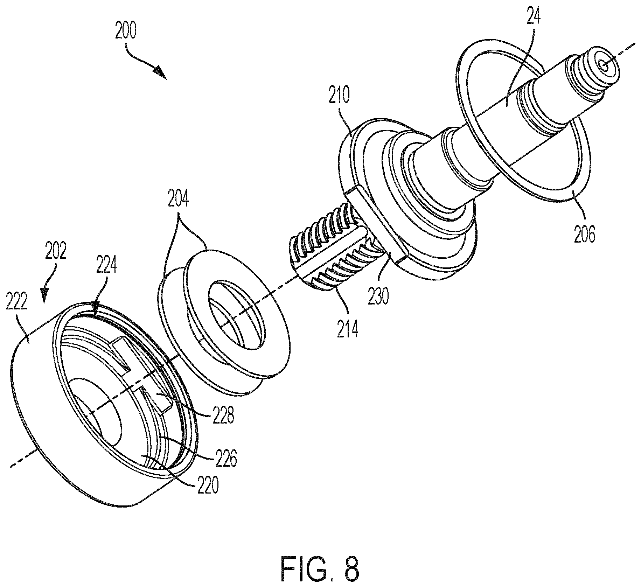

Fig. 8 depicts a perspective exploded view of the wheel retention mechanism 200 described above, according to an embodiment. As seen here, and with continued reference to Fig. 3, a sub-assembly including the wheel retention mechanism 200 and the output spindle 24 may be assembled independently from the gear case 14. In an embodiment, to provide this sub-assembly, the retention flange 202 and the spring elements 204 are mounted on the annular rim 210 of the output spindle 24 and secured via the retaining ring 206. To mount the sub-assembly on the gear case 14, the output spindle 24 of the sub-assembly is received through a lower surface of the lower gear case cover 14b into the bearing 212. In an embodiment, gearset 22 is also press-fitted onto the output spindle 24.

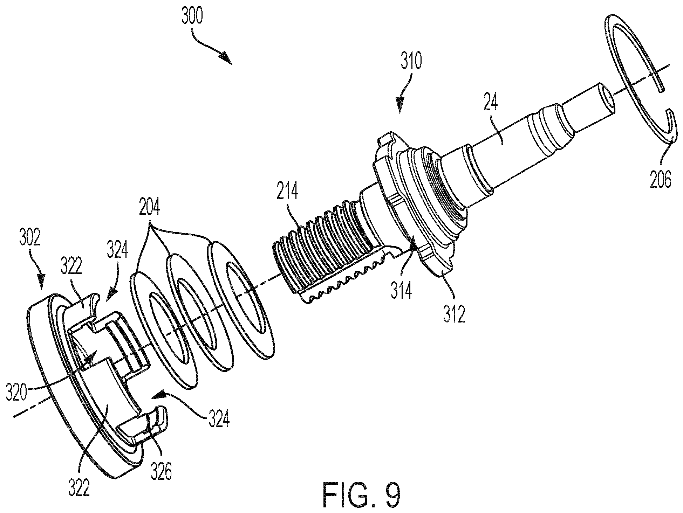

Fig. 9 depicts a perspective exploded view of a wheel retention mechanism 300, according to an alternative embodiment of the invention. In this embodiment, to the extent that the wheel retention mechanism 300 includes many of the same features described above, the same numeric references are provided. In an embodiment, output spindle 24 is provided with a modified annular rim 310 having a series of (in this example, four) radial projections 312 forming a series of recesses 314 therebetween. In an embodiment, a modified retention flange 302 is also provided including a cylindrical wall 322 that includes a series of (in this example, four) openings 324. The openings 324 are configured to receive the radial projections 312 of the annular rim 310, allowing the cylindrical wall 322 to be rotationally locked to annular rim 310. In an embodiment, spring elements 204 are sandwiched between the disc-shaped portion 320 of the retention flange 302 and the annular rim 310 of the output spindle 24. In an embodiment, retaining ring 206 is received within an annular recess 326 of the cylindrical wall 322 and sits above the annular rim 310 to limit the axial displacement of the retention flange 302 relative to the output spindle 24.

Both embodiments of the retention flange described above provide for a self-supporting wheel retention mechanism that can be manufactured and mounted on the output spindle as a sub-assembly prior to assembly of the output spindle into the gear case. Further, the spring force of the retention flange is transferred to the annular rim of the output spindle rather than the bearing, thus reducing wear and damage to the bearing over time.

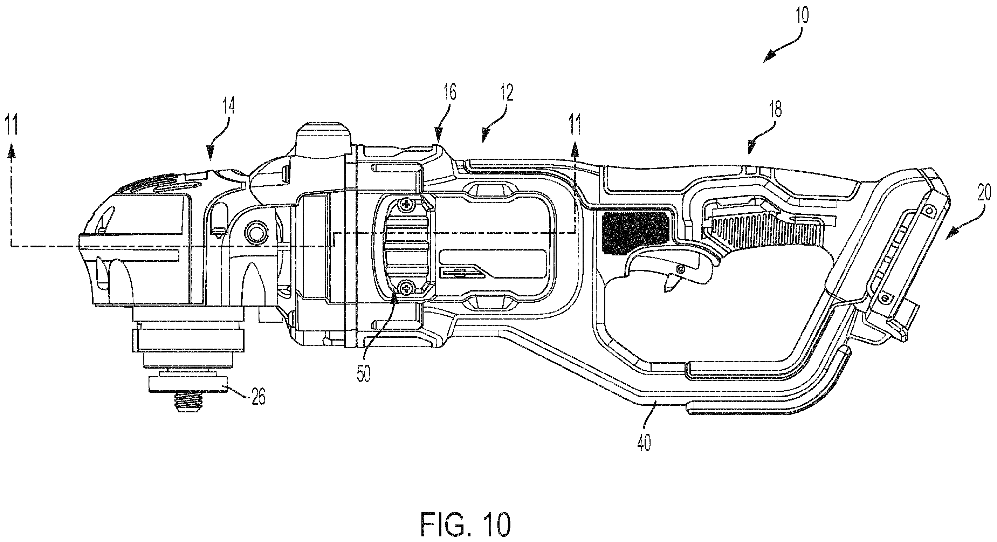

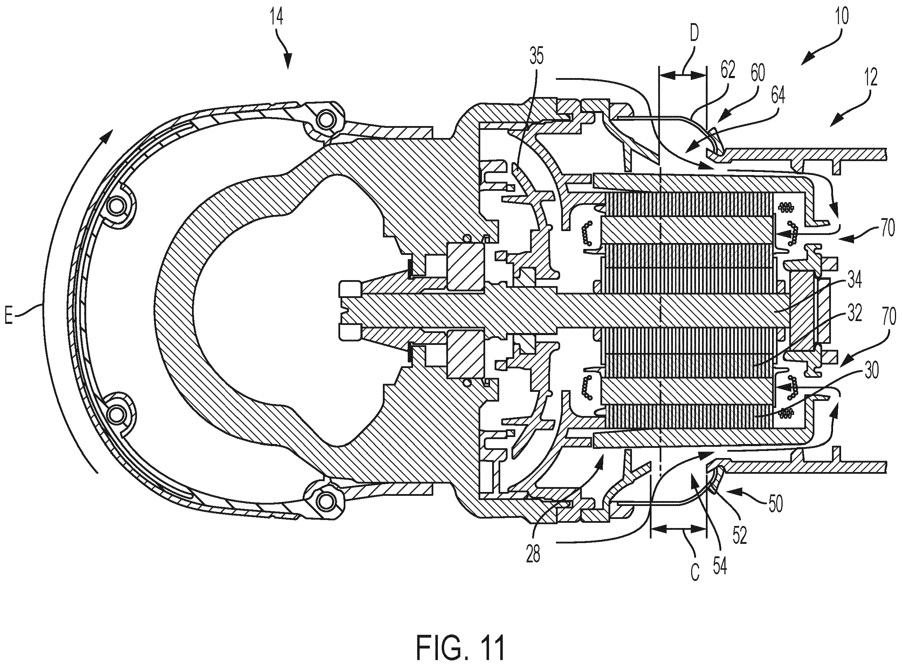

Another aspect of the invention is described herein with reference to Figs. 10 and 11.

Fig. 10 depicts a side view of the power tool 10 showing a left-side air intake 50, according to an embodiment. Fig. 11 depicts a top cross-sectional view of the power tool 10 along plane A shown in Fig. 10, according to an embodiment.

In an embodiment, the fan 35 rotates with the motor shaft 32 to generate an airflow through the motor 28 and other power tool components. The power tool housing 12 is provided with two side air intakes 50 and 60 positioned in the motor case 16 around the motor 28 for entry of ambient air. Air intake 50 and 60 are provided with screens (or a filters) 52 and 62 that blocks entry of dust and particulate through the air intakes 50 and 60. The filtered air then enters into the motor casing 16 through two air inlets 54 and 64 positioned radially inwardly of the air intakes 50 and 60. While screens 52 and 62 filter out majority of the debris and particulate, small amounts of debris can still get in through the screens 52 and 62. The filtered air travels along the outer sides of the motor 28 in a direction opposite the direction of the gear case 14, enters into the motor 28 through a series of openings 70 at the end of the motor 28, and travels through the stator 30 and/or the rotor 32 to cool the motor 28 components. The air then enters the gear case 24 or exists via the air exhaust vent 72 provided close to the gear case 24.

In an embodiment, wheel accessory (not shown) is rotates in a clockwise direction (direction E in Fig. 11) when viewing the power tool 10 from the top. This causes a higher concentration of grinding or cutting debris and particulate in the ambient air on the right side of the tool 10 than the left side when viewed from the top. According to an embodiment of the invention, to reduce exposure to the contaminated air and provide cleaner airflow in the power tool, right-side air inlet 64 is configured to be smaller than the left-side air inlet 54. In an embodiment, a width or diameter D of the right-side air inlet 64 is smaller than a width or diameter C of the left-side air inlet 54. In an embodiment, the width or diameter D of the right-side air inlet 64 is 80% to 90% of the width or diameter C of the left-side air inlet 54. The smaller right-side air inlet 64 allows a lower proportion of incoming air from the right side of the power tool 10 than the left side, thus reducing the total amount of contamination entering the motor 28.

In an embodiment, an area of the right-side air inlet 64 is in the range of 300 to 600 mm², preferably in the range of 400 to 500 mm², and an area of the left-side air inlet 54 is in the range of 500 to 800 mm², preferably in the range of 600 to 700 mm². In an embodiment, the area of the right-side air inlet 64 is approximately 60% to 90%, preferably 70% to 80%, preferably approximately 73% to 77%, of the area of the left-side air inlet 54.

This configuration provides for airflow through the right-side air inlet 64 in the range of approximately 10 to 16 cfm (cubic-feet per minute), preferably in the range of 12 to 14 cfm, and airflow through the left-side air inlet 54 in the range of 15-21 cfm, preferably in the range of 17-19 cfm. In an embodiment, the airflow through the right-side air inlet 64 is approximately 60% to 90%, preferably 65% to 80%, more preferably 70% to 75%, of the airflow through the left-side air inlet 54.

It should be understood that while in this example, the air inlets 54 and 64 are provided with different sizes, other components on the path of the airflow (e.g., the air intakes 50 and 60, the screens 52 and 62, the left and right air channels along the sides of the motor 28, etc.) may be similarly or alternatively provided with different sizes or shapes to provide a smaller airflow from the right-side air intakes 60 than the left-side air intakes 50. Similarly, the shape, thickness, or meshing of the screens 52 and 62 may be different to allow more airflow through the left-side screen 52 than the right-side screen 62.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

## Claims

1. A power tool comprising:
a housing (12);
an electric motor (28) housed within the housing (12);
an output spindle (24) rotatably driven by the electric motor (28), wherein the output spindle (24) defines a longitudinal axis and includes a threaded portion (214) near a distal end thereof and an annular rim (210) extending radially therefrom at a distance from the threaded portion (214);
a retention flange (202) including a radially-oriented disc-shaped portion (220) having a center through-hole through which the output spindle (24) extends and a cylindrical wall (222) peripherally extending from the disc-shaped portion (220) around the output spindle (24), wherein the disc-shaped portion (220) is located between the distal end of the output spindle (24) and the annular rim (210), and the cylindrical wall (222) extends around the annular rim (210);
at least one spring member (204) engaging a first surface of the annular rim (210) on one end and the disc-shaped portion (220) on another end to bias the retention flange (202) in a direction away from the annular rim (210); and
a retention member (206) engaging the retention flange (202);
**characterised in that** the annular rim (210) integrally extends radially from the output spindle (24) at a distance from the threaded portion (214);
wherein the retention flange (202) has a cup shaped body that includes the disk shaped portion (222) and a cylindrical wall (222) peripherally extending from the disc-shaped portion (220) around the output spindle (24),
wherein the cylindrical wall (222) extends around the annular rim (210);
wherein the retention member (206) engages the retention flange (202) and the annular rim (210) to restrain an axial displacement of the retention flange (202) away from the annular rim (210) due to the biasing force of the at least one spring member (204).

2. The power tool of claim 1, wherein, as a tool accessory is tightened on the threaded portion (214) of the output spindle (24), the tool accessory forces the retention member to move in the direction of the annular rim (210).

3. The power tool of claim 1, wherein the retention member engages a second surface of the annular rim (210) facing away from the at least one spring member (204).

4. The power tool of claim 3, wherein an inner surface of the cylindrical wall (222) of the retention flange (202) includes an annular recess (224), and wherein the retention member comprises a retaining ring (206) received within the annular recess (224) of the retention flange (202), the retaining ring (206) coming into selective contact with the second surface of the annular rim (210) of the output spindle (24) to limit the displacement of the retention flange (202) away from the annular rim (210).

5. The power tool of claim 4, wherein the retention flange (202) further comprises an annular shoulder (226) formed by a radial projection on the inner surface of the cylindrical wall (222) radially in line with the at least one spring member (204), the annular shoulder (226) coming into selective contact with the first surface of the annular rim (210) of the output spindle (24) to limit the displacement of the retention flange (202) towards from the annular rim (210).

6. The power tool of claim 1, further comprising a motor spindle rotatably driven directly by the motor (28), a gear case (14) mounted on the housing (12) that receives an end of the motor spindle, and a bearing (212) supported by the gear case (14), wherein the output spindle is received from a lower end of the gear case (14) into the bearing (212) into engagement with the motor spindle.

7. The power tool of claim 1, wherein the at least one spring member (204) comprises one or more Belleville discs.

8. The power tool of claim 1, wherein a diameter of the annular rim (210) of the output spindle (24) is greater than a diameter of the at least one spring member (204), but smaller than a diameter of the cylindrical wall (222) of the retention flange (202).

9. The power tool of claim 1, wherein the retention flange (202) includes a flat wall (228) protruding inwardly from the cylindrical wall (222) that engages a corresponding flat wall (230) of the annular rim (210) of the output spindle (24) to rotationally fix the retention flange (202) to the output spindle (24).

10. The power tool of claim 1, wherein the cylindrical wall (222) of the retention flange (202) includes a plurality of openings and the annular rim of the output spindle (24) includes a plurality of radial projections (312) configured to be fittingly received into the plurality of openings (324) to rotationally fix the retention flange (202) to the output spindle (24).

## Patentansprüche

1. Elektrowerkzeug, umfassend:
ein Gehäuse (12);
einen Elektromotor (28), der im Gehäuse (12) untergebracht ist;
eine Ausgangsspindel (24), die drehbar durch den Elektromotor (28) angetrieben wird, wobei die Ausgangsspindel (24) eine Längsachse definiert und einen Gewindeabschnitt (214) in der Nähe ihres distalen Endes sowie einen ringförmigen Rand (210), der sich radial von dieser in einem Abstand von dem Gewindeabschnitt (214) erstreckt, beinhaltet;
ein Halteflansch (202), der einen radial ausgerichteten scheibenförmigen Abschnitt (220) beinhaltet, der eine mittigen Durchgangsbohrung aufweist, durch die sich die Ausgangsspindel (24) erstreckt, und eine zylindrische Wand (222), die sich peripher von dem scheibenförmigen Abschnitt (220) um die Ausgangsspindel (24) erstreckt, wobei sich der scheibenförmige Abschnitt (220) zwischen dem distalen Ende der Ausgangsspindel (24) und dem ringförmigen Rand (210) befindet und sich die zylindrische Wand (222) um den ringförmigen Rand (210) erstreckt;
mindestens ein Federelement (204), das an einem Ende mit einer ersten Fläche des ringförmigen Rands (210) und an einem anderen Ende mit dem scheibenförmigen Abschnitt (220) eingreift, um den Halteflansch (202) in eine Richtung vom ringförmigen Rand (210) vorzuspannen; und
ein Halteelement (206), das mit dem Halteflansch (202) eingreift;
**dadurch gekennzeichnet, dass** sich der ringförmige Rand (210) radial von der Ausgangsspindel (24) in einem Abstand von dem Gewindeabschnitt (214) einstückig erstreckt;
wobei der Halteflansch (202) einen becherförmigen Körper aufweist, der den scheibenförmigen Abschnitt (222) und eine zylindrische Wand (222) beinhaltet, die sich vom scheibenförmigen Abschnitt (220) um die Ausgangsspindel (24) herum erstreckt,
wobei sich die zylindrische Wand (222) um den ringförmigen Rand (210) erstreckt;
wobei das Halteelement mit dem Halteflansch (202) und dem ringförmigen Rand (210) eingreift, um eine axiale Verschiebung des Halteflansches (202) vom ringförmigen Rand (210) weg aufgrund der Vorspannkraft des mindestens einen Federelements (204) zu verhindern.

2. Elektrowerkzeug nach Anspruch 1, wobei beim Festziehen eines Werkzeugzubehörs auf dem Gewindeteil (214) der Ausgangsspindel (24) das Werkzeugzubehör das Halteelement zwingt, sich in Richtung des ringförmigen Rands (210) zu bewegen.

3. Elektrowerkzeug nach Anspruch 1, wobei das Halteelement mit einer zweiten Fläche des ringförmigen Rands (210) eingreift, die von dem mindestens einen Federelement (204) abgewandt ist.

4. Elektrowerkzeug nach Anspruch 3, wobei eine Innenfläche der zylindrischen Wand (222) des Halteflansches (202) eine ringförmige Aussparung (224) beinhaltet und wobei das Halteelement einen in der ringförmigen Aussparung (224) des Halteflansches (202) aufgenommenen Sicherungsring (206) umfasst, wobei der Sicherungsring (206) selektiv mit der zweiten Fläche des ringförmigen Rands (210) der Ausgangsspindel (24) in Kontakt kommt, um die Verschiebung des Halteflansches (202) vom ringförmigen Rand (210) weg zu begrenzen.

5. Elektrowerkzeug nach Anspruch 4, wobei der Halteflansch (202) ferner eine ringförmige Schulter (226) aufweist, die durch einen radialen Vorsprung an der Innenfläche der zylindrischen Wand (222) gebildet wird, der radial mit dem mindestens einen Federelement (204) fluchtet, wobei die ringförmige Schulter (226) selektiv mit der ersten Fläche des ringförmigen Rands (210) der Ausgangsspindel (24) in Kontakt kommt, um die Verschiebung des Halteflansches (202) zum ringförmigen Rand (210) hin zu begrenzen.

6. Elektrowerkzeug nach Anspruch 1, ferner umfassend eine Motorspindel, die direkt vom Motor (28) drehbar angetrieben wird, ein auf dem Gehäuse (12) montiertes Getriebegehäuse (14), das ein Ende der Motorspindel aufnimmt, und ein vom Getriebegehäuse (14) getragenes Lager (212), wobei die Ausgangsspindel von einem unteren Ende des Getriebegehäuses (14) in das Lager (212), in Eingriff mit der Motorspindel aufgenommen wird.

7. Elektrowerkzeug nach Anspruch 1, wobei das mindestens eine Federelement (204) eine oder mehrere Tellerfedern umfasst.

8. Elektrowerkzeug nach Anspruch 1, wobei der Durchmesser des ringförmigen Rands (210) der Ausgangsspindel (24) größer als ein Durchmesser des mindestens einen Federelements (204), aber kleiner als ein Durchmesser der zylindrischen Wand (222) des Halteflansches (202) ist.

9. Elektrowerkzeug nach Anspruch 1, wobei der Halteflansch (202) eine ebene Wand (228) beinhaltet, die von der zylindrischen Wand (222) nach innen vorsteht und mit einer entsprechenden ebenen Wand (230) des ringförmigen Rands (210) der Ausgangsspindel (24) eingreift, um den Halteflansch (202) drehbar an der Ausgangsspindel (24) zu fixieren.

10. Elektrowerkzeug nach Anspruch 1, wobei die zylindrische Wand (222) des Halteflansches (202) eine Vielzahl von Öffnungen beinhaltet und der ringförmige Rand der Ausgangsspindel (24) eine Vielzahl von radialen Vorsprüngen (312) beinhaltet, die dazu konfiguriert sind, passgenau in die Vielzahl von Öffnungen (324) aufgenommen zu werden, um den Halteflansch (202) drehbar an der Ausgangsspindel (24) zu fixieren.

## Revendications

1. Outil électrique comprenant :
un boîtier (12) ;
un moteur électrique (28) logé dans le boîtier (12) ;
une broche de sortie (24) entraînée en rotation par le moteur électrique (28), dans lequel la broche de sortie (24) définit un axe longitudinal et inclut une partie filetée (214) près d'une extrémité distale de celle-ci et un rebord annulaire (210) s'étendant radialement à partir de celle-ci à une distance de la partie filetée (214) ;
une bride de retenue (202) incluant une partie en forme de disque orientée radialement (220) présentant un trou traversant central à travers lequel s'étend la broche de sortie (24) et une paroi cylindrique (222) s'étendant de manière périphérique par rapport à la partie en forme de disque (220) autour de la broche de sortie (24), dans lequel la partie en forme de disque (220) est située entre l'extrémité distale de la broche de sortie (24) et le rebord annulaire (210), et la paroi cylindrique (222) s'étend autour du rebord annulaire (210) ;
au moins un élément ressort (204) se mettant en prise avec une première surface du rebord annulaire (210) à une extrémité et avec la partie en forme de disque (220) à l'autre extrémité pour amener la bride de retenue (202) dans une direction à l'opposé du rebord annulaire (210) ; et
un élément de retenue (206) se mettant en prise avec la bride de retenue (202) ;
**caractérisé en ce que** le rebord annulaire (210) s'étend radialement d'un seul tenant à partir de la broche de sortie (24) à une distance de la partie filetée (214) ;
dans lequel la bride de retenue (202) présente un corps en forme de coupe qui inclut la partie en forme de disque (222) et une paroi cylindrique (222) s'étendant de manière périphérique par rapport à la partie en forme de disque (220) autour de la broche de sortie (24),
dans lequel la paroi cylindrique (222) s'étend autour du rebord annulaire (210) ;
dans lequel l'élément de retenue se met en prise avec la bride de retenue (202) et le rebord annulaire (210) pour empêcher un déplacement axial de la bride de retenue (202) à l'opposé du rebord annulaire (210) en raison de la force de sollicitation d'au moins un élément ressort (204).

2. Outil électrique selon la revendication 1, dans lequel, lorsqu'un accessoire d'outil est serré sur la partie filetée (214) de la broche de sortie (24), l'accessoire d'outil force l'élément de retenue à se déplacer dans la direction du rebord annulaire (210).

3. Outil électrique selon la revendication 1, dans lequel l'élément de retenue se met en prise avec une seconde surface du rebord annulaire (210) orientée à l'opposé du au moins un élément ressort (204).

4. Outil électrique selon la revendication 3, dans lequel une surface interne de la paroi cylindrique (222) de la bride de retenue (202) inclut un évidement annulaire (224), et dans lequel l'élément de retenue comprend un anneau de retenue (206) reçu dans l'évidement annulaire (224) de la bride de retenue (202), l'anneau de retenue (206) entrant en contact sélectif avec la seconde surface du rebord annulaire (210) de la broche de sortie (24) pour limiter le déplacement de la bride de retenue (202) à l'opposé du rebord annulaire (210).

5. Outil électrique selon la revendication 4, dans lequel la bride de retenue (202) comprend en outre un épaulement annulaire (226) formé par une projection radiale sur la surface interne de la paroi cylindrique (222) radialement alignée avec le au moins un élément ressort (204), l'épaulement annulaire (226) entrant en contact sélectif avec la première surface du rebord annulaire (210) de la broche de sortie (24) pour limiter le déplacement de la bride de retenue (202) vers le rebord annulaire (210).

6. Outil électrique selon la revendication 1, comprenant en outre une broche de moteur entraînée en rotation directement par le moteur (28), un carter d'engrenages (14) monté sur le boîtier (12) qui reçoit une extrémité de la broche de moteur, et un palier (212) supporté par le carter d'engrenages (14), dans lequel la broche de sortie est reçue à partir d'une extrémité inférieure du carter d'engrenages (14) dans le palier (212) pour se mettre en prise avec la broche de moteur.

7. L'outil électrique selon la revendication 1, dans lequel le au moins un élément ressort (204) comprend un ou plusieurs disques Belleville.

8. Outil électrique selon la revendication 1, dans lequel le diamètre du rebord annulaire (210) de la broche de sortie (24) est supérieur à un diamètre du au moins un élément ressort (204), mais inférieur à un diamètre de la paroi cylindrique (222) de la bride de retenue (202).

9. Outil électrique selon la revendication 1, dans lequel la bride de retenue (202) inclut une paroi plate (228) faisant saillie vers l'intérieur à partir de la paroi cylindrique (222) qui se met en prise avec une paroi plate (230) correspondante du rebord annulaire (210) de la broche de sortie (24) pour fixer de manière rotative la bride de retenue (202) à la broche de sortie (24).

10. Outil électrique selon la revendication 1, dans lequel la paroi cylindrique (222) de la bride de retenue (202) inclut une pluralité d'ouvertures et le rebord annulaire de la broche de sortie (24) inclut une pluralité de projections radiales (312) configurées pour être reçues de manière ajustée dans la pluralité d'ouvertures (324) pour fixer de manière rotative la bride de retenue (202) à la broche de sortie (24).
